Europäisches Patentamt

European Patent Office

Office européen des brevets

(11) Publication number: **0 339 967**
A1

# EUROPEAN PATENT APPLICATION

(21) Application number: 89304153.3

(51) Int. Cl.⁴: **B 60 R 21/00**

(22) Date of filing: 26.04.89

(30) Priority: 27.04.88 GB 8810011
07.12.88 GB 8828602

(43) Date of publication of application:
02.11.89 Bulletin 89/44

(84) Designated Contracting States:
DE ES FR GB IT SE

(71) Applicant: TRW Transportation Electronics Limited
Phoenix Way
Cirencester Gloucestershire GL7 1YZ (GB)

(72) Inventor: Horton, Christopher David
Grove Barn Bagendon
Cirencester Gloucestershire GL7 1YZ (GB)

(74) Representative: Lainé, Simon James et al
Wynne-Jones, Lainé & James 22, Rodney Road
Cheltenham Gloucestershire. GL50 1JJ (GB)

(54) Improvements relating to firing circuits for restraints in vehicles.

(57) A firing circuit for air bag restraints has parallel branches each with a power source (11; 21; 31a, 31b) in series with a squib (12; 22, 32). The circuit is completed through a set of crash sensors (13; 23; 33a,33b) in parallel, an earthed lead (14; 24; 34a, 34b) and a safing sensor (15; 25; 35a, 35b). At least one crash sensor and the safing sensor have to close to cause the squibs to fire. The power sources are preferably capacitors, (21; 31a, 31b) charged from the vehicle supply, and duplicated.

Fig. 2.

EP 0 339 967 A1

## Description

### Improvements relating to Firing Circuits for Restraints in Vehicles

This invention relates to restraints in vehicles and the firing circuits therefor. It is primarily concerned with firing circuits for air bags in road vehicles, but may also serve to trigger other devices, such as seat belt pre-tensioners.

Currently most such air bags are fired by an electric current being passed through a squib or fuse in response to the closing of a switch or crash sensor mounted on the front of the vehicle and a safing sensor mounted in the passenger compartment. The latter will generally incorporate an inertia device that will only operate under extreme conditions of deceleration, remaining insensitive to severe braking or a jolting ride over rough surfaces. A crash sensor will be activated by direct impact.

Where more than one air bag is provided (for driver and passenger) or where the sensors are used to trigger seat belt pre-tensioners, all the squibs may be wired in parallel. However, this method can produce unequal currents in the squibs, to the extent that some may not fire. This problem can be overcome by providing a separate power source for each squib.

It is of course crucial that such circuits should respond immediately when required and yet never fire accidentally or at the wrong moment. It is the aim of this invention further to improve their reliability and, in particular, to guard against the restraints being caused to fire by any fault in the wiring, such as a short circuit to the chassis or battery.

According to the present invention there is provided a firing circuit for a plurality of restraints in vehicles, wherein there is an electrical triggering device for each restraint connectable across a power source via a crash sensor, an earthed lead, and a safing sensor, the earthed lead normally being isolated from the triggering devices by the sensors at opposite ends.

Preferably, each triggering device will be in a respective parallel branch of the circuit with an associated power source. To guard against failure, each power source may be duplicated, with the sources of each pair in parallel.

Generally, there will be a plurality of crash sensors connected in parallel, and they may have different characteristics or response thresholds. There may also be a plurality of safing sensors, also connected in parallel, and they too may differ. Where the power sources are duplicated, one safing sensor may be in series with one from each paired power source, while another safing sensor may be in series with the other from each paired power source.

In the preferred form, each power source comprises a capacitive device charged from the electrical supply of the vehicle in which the restraints are fitted. A single capacitor charged through a resistor is in theory sufficient, but with duplication to guard against failure there will be two or even more capacitors in parallel, each with their associated resistor. It will also be advisable to have a diode in series with each power source, before connection to the common line to the safing sensor, to maintain the independence of operation of each respective power source and triggering devices.

It is sometimes desirable to prevent one or more of the triggering devices firing under certain circumstances. For example, when there is no passenger, there is no point in having the air bag for that seat inflated in the event of a crash. The presence of a passenger can readily be detected and used to switch in or prime the associated triggering device, and this is usually done through relay contacts or a transistor in series with the triggering device. However, this adversely affects reliability, since the switching device is expected to carry the large firing circuit while being subjected to the mechanical shocks and vibration that occur during a crash.

With independent power sources using capacitive devices, a selective activating device for each triggering device may be included in the associated charging circuit.

This activating device may be an electromechanical relay, but preferably, since the charging can be achieved by a low current over a comparatively long time as compared with the discharge, an electronic switch such as a transistor will be used.

For a better understanding of the invention, some embodiments will now be described, by way of example, with reference to the accompanying drawings, in which:

Figure 1 is a circuit diagram of an air bag firing circuit,

Figure 2 is a circuit diagram of another air bag firing circuit, and

Figure 3 is a circuit diagram of a further such circuit.

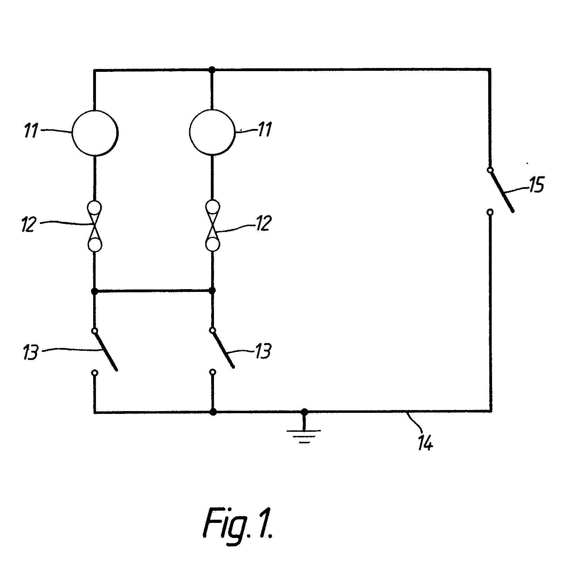

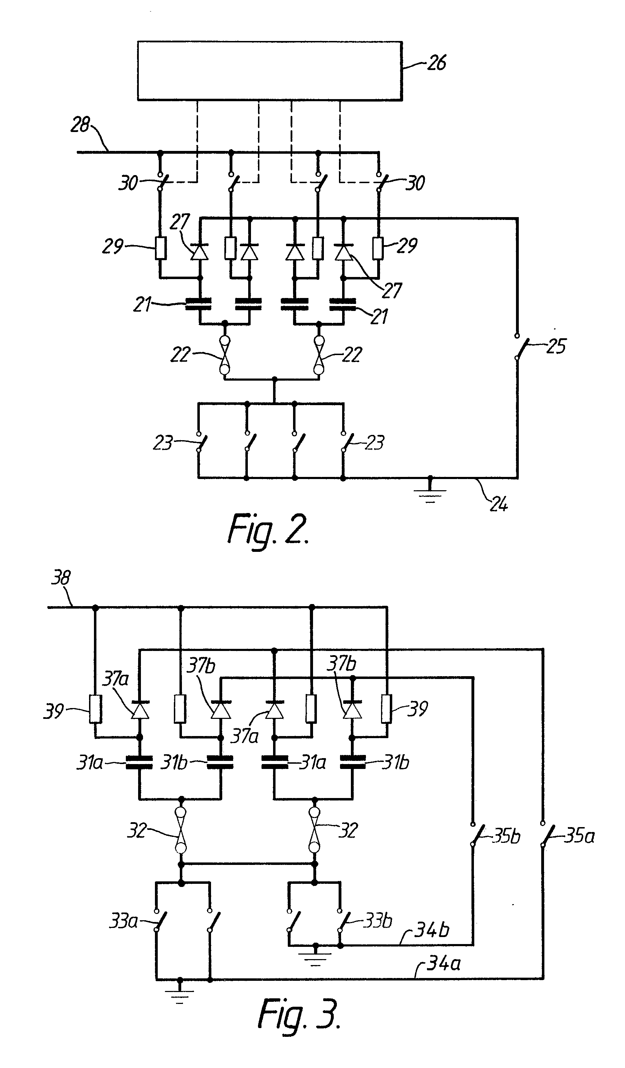

The parts described in Figure 1 are referenced similarly but with the addition of 10 for Figure 2 and with the addition of 20 for Figure 3.

In Figure 1, a firing circuit has two parallel branches each with a power source 11 and a squib 12. These parallel branches are connected in series with a group of crash sensors 13 in parallel, an earthed lead 14 and a safing sensor 15.

In use, if either or both of the crash sensors 13 and the safing sensor 15 close due to the vehicle experiencing an impact, a current is passed through the squibs 12 causing the air bags in the vehicle to fire. It will be seen that the isolating of the earth lead 14 means that the squib cannot fire accidentally on a single short circuit. It also enables the circuit to use only a single safing sensor.

In Figure 2 the power sources 21 are capacitors, duplicated and in parallel for each squib 22, and each with a diode 27 before connection to the common line to the safing sensor 25. The capacitors are charged from a common source 28 through respective resistors 29 and switching devices 30, which may be transistors. The state of these is governed by a conditional logic circuit 26 so that, as outlined above, some may be closed and others open according to which part of the circuit should be primed.

The circuit also illustrates that the number of crash sensors 23 does not have to coincide with the number of squibs 22. Of course, there can also be more than two squibs.

In Figure 3, there are two safing sensors 35a and 35b with different response characteristics, the sensor 35a being connected through diodes 37a to first capacitors 31a associated with respective squibs 32 and the sensor 35b being connected through diodes 37b to second capacitors 31b associated with those squibs. Similarly, the crash sensors 33 are divided into two groups 33a and 33b with different sensitivities, although they are still all in parallel.

This circuit shows how multiple firing conditions may be achieved, but when fewer are required it may be done simply through two or more safing sensors in parallel or two or more different crash sensors in parallel.

It will also be understood that the conditional logic circuit 26 and switching devices 30 could be applied to Figure 3., but have been omitted for simplicity.

## Claims

1. A firing circuit for a plurality of restraints in vehicles comprising an electrical triggering device (12,22,32) for each restraint connectable across a power source (11,21,31a,31b) via a crash sensor (13,23,33a,33b), and a safing sensor (15,25,35a,35b) characterised in that the sensors are at opposite ends of an earthed lead (14,24,34a,34b) which is thereby normally isolated from the triggering devices.

2. A circuit as claimed in Claim 1, characterised in that each triggering device (12,22,32) is in a respective parallel branch of the circuit with an associated power source (11,21,31a, 31b).

3. A circuit as claimed in Claim 2, characterised in that each power source (21,31a 31b) is duplicated and the sources of each pair are in parallel.

4. A circuit as claimed in Claim 1, 2 or 3, characterised in that there is a plurality of crash sensors (13,23,33a,33b) connected in parallel.

5. A circuit as claimed in any preceding claim, characterised in that there is a plurality of safing sensors (35a, 35b) connected in parallel.

6. A circuit as claimed in Claim 5 as appendant to Claim 3, characterised in that one safing sensor (35a) is in a series with one of each paired power source (31a) and another safing sensor (35b) is in series with the other of each paired power source (31b).

7. A circuit as claimed in any preceding claim, characterised in that each power source (11,21,31a,31b) comprises a capacitive device charged from the electrical supply of the vehicle in which the restraints are fitted.

8. A circuit as claimed in Claim 7, characterised in that each capacitive device (21) has an associated charging circuit including a selective activating device (30).

Fig.1.

Fig. 2.

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 116 867  (BMW)<br>* page 6, lines 6-20 * | 1 | B 60 R  21/00 |
| Y | | 4,7,8 | |
| | --- | | |
| Y | US-A-3 629 816  (GILLUND)<br>* column 2, lines 17-27 * | 4 | |
| | --- | | |
| Y | US-A-4 222 030  (YASUI et al.)<br>* column 2, lines 17-53 * | 7,8 | |
| A | | 1,2 | |
| | ----- | | |

TECHNICAL FIELDS
SEARCHED (Int. Cl.4)

B 60 R

The present search report has been drawn up for all claims

| Place of search | Date of completion of the search | Examiner |
|---|---|---|
| BERLIN | 21-07-1989 | STANDRING M A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)